# FASCICULE DE BREVET EUROPEEN

(11) **EP 2 355 681 B1**
(45) Date de publication et mention de la délivrance du brevet: **29.08.2012**
(21) Numéro de dépôt: 09804045.4
(22) Date de dépôt: 10.12.2009
(51) Int. Cl.: A47J 43/046, A47J 43/07

(54) **APPAREIL ÉLECTROMÉNAGER DE PRÉPARATION ET DE CUISSON DE LAIT DE SOJA, JUS OU COULIS**
ELEKTRISCHE VORRICHTUNG ZUR HERSTELLUNG UND ZUM KOCHEN VON SOJAMILCH, FRUCHTSÄFTEN ODER PÜREES
ELECTRICAL APPLIANCE FOR PREPARING AND COOKING SOY MILK, JUICE, OR COULIS

(30) Priorité: 10.12.2008 FR 0858426
(43) Date de publication de la demande: 17.08.2011
(73) Titulaire: SEB S.A., 69130 Ecully (FR)
(72) Inventeur: PERRIER, Matthieu, 65310 Laloubère (FR)
(74) Mandataire: Blanchard, Eugène Gilles
(86) Numéro de dépôt international: PCT/FR2009/052481
(87) Numéro de publication internationale: WO 2010/067030

(56) Documents cités:
- EP-A- 1 483 989
- EP-A- 1 500 332
- EP-A- 1 836 905
- WO-A-2006/017967
- US-A- 5 852 965
- US-A1- 2004 149 148
- US-A1- 2005 051 032

## Description

La présente invention concerne le domaine des appareils électroménagers de préparation de lait de soja et/ou de jus, et/ou de coulis.

Plus particulièrement, invention concerne un appareil électroménager prévu pour la préparation et la cuisson de préparations alimentaires liquides telles que du lait de soja et/ou des jus, et/ou des coulis.

Parmi les appareils du type précité, certains, comme par exemple décrits dans les demandes de brevet EP 1 836 905 A1 et CN 1426723, fonctionnent par mixage et chauffage simultanés d'eau et de graines de soja imbibées. Ceci a pour effet négatif de créer une mousse importante liée à la composition des graines de soja. Pour pallier ce problème, des capteurs anti débordement sont parfois positionnés dans les appareils pour contrôler les phases de mixage. D'autre part, le cycle de chauffe est complexe du fait que les graines changent de taille (devenant des morceaux), ce qui implique une alternance entre chauffe et mixage pour assurer une bonne cuisson.

Ces appareils comportent en outre au moins un filtre pour séparer le lait et le résidu de mixage, appelé okara, qui contient principalement la peau de la graine. Ce filtre est soit in situ dans l'appareil, autour de l'organe de mixage, soit hors de l'appareil, sous forme de passoire. Lorsque le filtre est interne, celui-ci est très difficile à nettoyer ; lorsqu'il est externe, cela exige une manipulation supplémentaire de l'utilisateur pour filtrer le lait dans un premier temps puis le récupérer dans un second récipient dans un second temps.

On connaît également du document CN 101028168 un appareil de préparation de lait de soja dans lequel l'extraction du lait de soja s'effectue par une pompe depuis une première enceinte de mélange des graines de soja et d'eau vers une seconde enceinte de chauffage. Cependant cet appareil ne permet pas de séparer le lait de l'okara dans la mesure où il ne comporte aucun système de séparation de ces deux éléments.

Or, la cuisson du lait mélangé avec l'okara présente sur le plan nutritionnel l'inconvénient d'altérer la qualité du lait obtenu. En effet la peau de la graine présente des composants peu digestibles et est susceptible d'avoir absorbé des composés chimiques indésirables.

Le document US 2004/149148 divulgue un appareil électroménager de préparation et de cuisson de lait de soja, comportant un moyen de filtration divisant une enceinte de travail en un premier compartiment logeant un moyen de broyage et un deuxième compartiment communiquant avec une sortie d'évacuation pour le lait de soja, cette sortie d'évacuation communiquant avec un réservoir amovible associé à des moyens de chauffage du lait de soja recueilli à l'intérieur du réservoir.

Toutefois dans ce document l'enceinte de travail comporte un récipient entraîné en rotation pour centrifuger le contenu du deuxième compartiment, ce récipient étant fermé par un couvercle interne. Le couvercle interne en place sur le récipient doit ménager un passage permettant l'évacuation du jus centrifugé dans une goulotte reliée à une sortie d'évacuation communiquant avec le réservoir. Un couvercle externe retenu par un arceau est monté sur le boîtier au dessus du couvercle interne.

Un inconvénient de la réalisation proposée dans ce document réside dans la nécessité de mettre en place les graines de soja à l'intérieur du moyen de filtration avant de fermer le couvercle interne et le couvercle externe. Un autre inconvénient de la réalisation proposée dans ce document réside dans l'utilisation d'un récipient rotatif pour transférer le lait de soja dans le réservoir associé aux moyens de chauffage.

Le but de la présente invention est de proposer un appareil électroménager de préparation et cuisson d'une préparation alimentaire liquide telle que du lait de soja et/ou de jus et/ou de coulis qui ne présente pas les inconvénients des appareils connus de l'art antérieur.

Én particulier, un but de l'invention est de proposer un appareil électroménager de préparation et de cuisson d'une préparation alimentaire liquide telle que du lait de soja et/ou de jus et/ou de coulis qui permette une séparation efficace du lait de soja et de l'okara et une cuisson du lait de soja séparé de l'okara.

A cet effet, la présente invention propose un appareil électroménager (1) de préparation et de cuisson d'une préparation alimentaire liquide telle que du lait de soja et/ou de jus et/ou de coulis, comportant :
- un boîtier renfermant un moteur électrique d'entraînement,
- une enceinte de travail adaptée pour être installée sur le boîtier, l'enceinte de travail comportant une ouverture d'admission d'aliments ainsi qu'une sortie d'évacuation pour la préparation alimentaire liquide,
- un moyen de broyage monté à l'intérieur de l'enceinte de travail et accouplé mécaniquement à un arbre d'entraînement du moteur électrique,
- un moyen de filtration divisant l'enceinte de travail en un premier compartiment logeant le moyen de broyage et un deuxième compartiment communiquant avec la sortie d'évacuation,
- la sortie d'évacuation communiquant avec un réservoir amovible associé à des moyens de chauffage de la préparation alimentaire liquide recueillie à l'intérieur du réservoir.

Conformément à l'invention, le premier compartiment communique avec l'ouverture d'admission d'aliments, et la sortie d'évacuation est localisée à la base de l'enceinte de travail. De plus, la sortie d'évacuation est reliée à l'enceinte de travail par un conduit adapté à une évacuation par gravité de la préparation alimentaire liquide dans le réservoir.

L'appareil de l'invention permet ainsi par exemple lorsque la préparation alimentaire préparée est du lait de soja d'extraire le lait des graines de soja préalablement imbibées dans de l'eau par un mixage de ces graines au contact d'un filtre, puis de récupérer individuellement le lait "cru" dans un réservoir de cuisson du lait comprenant des moyens de chauffage. De plus, l'appareil permet automatiquement de séparer les graines de leur peau. La séparation de la peau des graines préalablement à la phase de cuisson, permet d'une part de grandement limiter l'effet de moussage rencontré avec les appareils classiques. D'autre part, le fait de "trier" le lait des graines et leur peau par l'intermédiaire du moyen de filtration permet de limiter la production d'éléments antinutritionnels lors de la cuisson du lait, éléments antinutritionnels qui sont principalement contenus dans la peau et qui ont tendance à diffuser dans le lait au cours de sa préparation avec les appareils de l'art antérieur. L'appareil de l'invention est adapté à la préparation de nombreuses préparations alimentaires liquides telles que des jus ou des coulis.

Selon une première caractéristique de l'invention, le moyen de filtration est amovible par rapport à l'enceinte de travail, ce qui permet un nettoyage de celui-ci.

Avantageusement en outre, les moyens de chauffage sont adaptés pour permettre un chauffage et une cuisson de la préparation alimentaire liquide contenue dans le réservoir pendant une durée et à une température déterminées.

Toujours selon l'invention, l'appareil de l'invention comporte des moyens de contrôle de la température de la préparation alimentaire liquide à l'intérieur du réservoir.

De façon avantageuse, il comporte également des moyens de réglage de la durée de chauffage des moyens de chauffage.

Dans un mode de réalisation préféré de l'appareil de l'invention, les moyens de chauffage comportent au moins une résistance intégrée au réservoir recevant la préparation alimentaire liquide, ladite résistance étant connectée à des moyens d'alimentation électrique.

De préférence dans ce mode de réalisation préféré, la résistance est de type CTP.

Toujours selon l'invention et un mode préféré de réalisation, la résistance de type CTP est constituée d'un film appliqué sur une paroi au moins du réservoir.

Conformément à une autre caractéristique avantageuse de l'appareil de l'invention, le réservoir est constitué d'un matériau transparent permettant de visualiser la préparation alimentaire liquide en cours de cuisson.

De façon privilégiée, le réservoir comporte des moyens de connexion étanche avec la première sortie d'évacuation de l'enceinte de travail pour le lait ou le jus.

Toujours selon l'invention, le moyen de broyage de l'appareil comporte une vis de pressage.

De préférence encore, le moyen de filtration entoure le moyen de broyage.

Toujours selon l'invention, le premier compartiment comporte une deuxième sortie d'évacuation pour les résidus de pressage.

Avantageusement, la deuxième sortie d'évacuation communique avec un second réservoir dans lequel les résidus de pressage sont évacués au fur et à mesure du pressage dans l'enceinte de travail.

Enfin, toujours selon l'invention, la sortie d'évacuation comporte de façon préférentielle un robinet de distribution de la préparation alimentaire liquide.

Diverses autres caractéristiques ressortent de la description faite ci-dessous en référence aux dessins annexés qui montrent, à titre d'exemples non limitatifs, des formes de réalisation de l'objet de l'invention.

Sur les figures :
- la figure 1 représente un appareil électroménager selon la présente invention dans un mode de réalisation préféré ;
- la **figure 2** représente l'appareil de la **figure 1** vu de côté ;
- la **figure 3** représente une variante de réalisation de l'appareil de l'invention comportant un robinet d'écoulement du lait de soja jus ou coulis.

L'invention propose un nouvel appareil électroménager **1** spécifiquement dédié à la préparation et la cuisson de lait de soja et la description qui va suivre porte essentiellement sur cette utilisation privilégiée de l'appareil proposé. Toutefois, l'appareil **1** de l'invention permet également de réaliser des jus et/ou des coulis de fruits ou légumes pressés ou mixés.

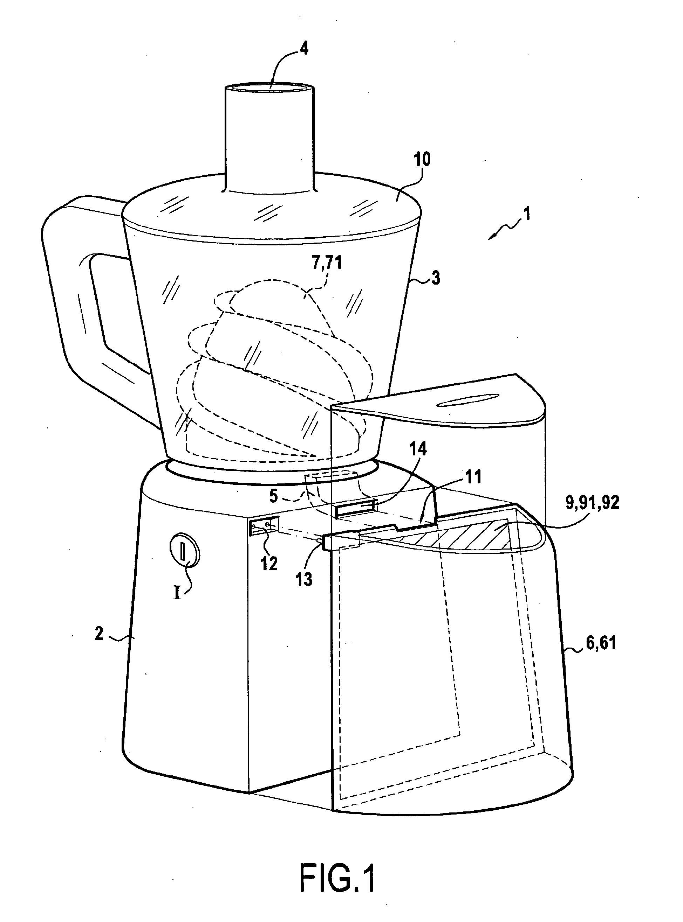

En référence tout d'abord à la **figure 1**, l'appareil électroménager **1** de la présente invention comporte un boîtier **2** sur lequel peut être assemblée une enceinte de travail **3**.

Le boîtier **2** renferme, de façon connue en soi, un moteur électrique d'entraînement ainsi qu'une électronique de commande et pilotage de ce moteur. L'axe d'entrainement **M** du moteur s'étend partiellement en saillie à la surface d'une platine de fixation formée sur le boîtier pour recevoir et fixer l'enceinte de travail **3**.

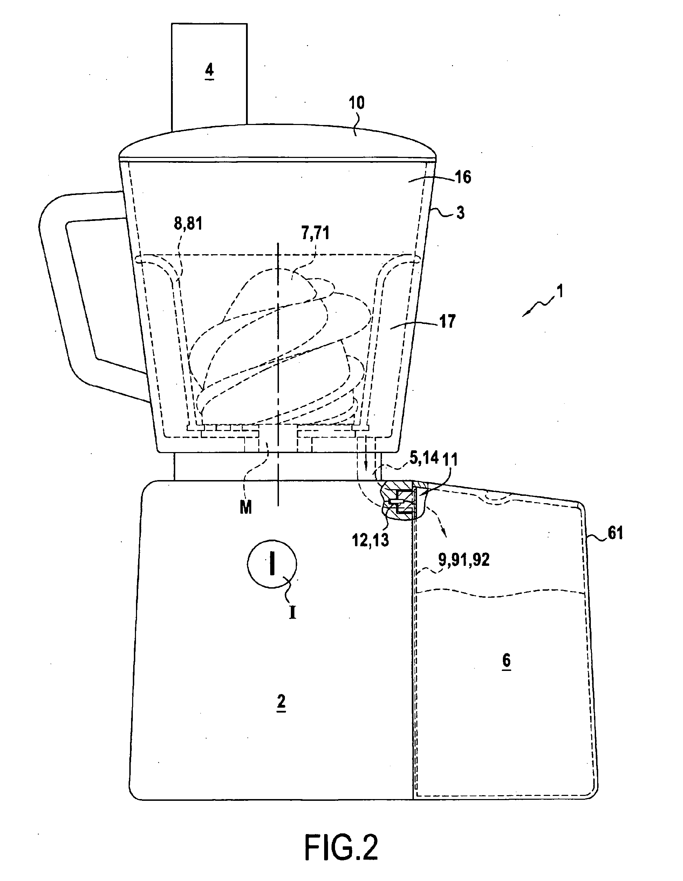

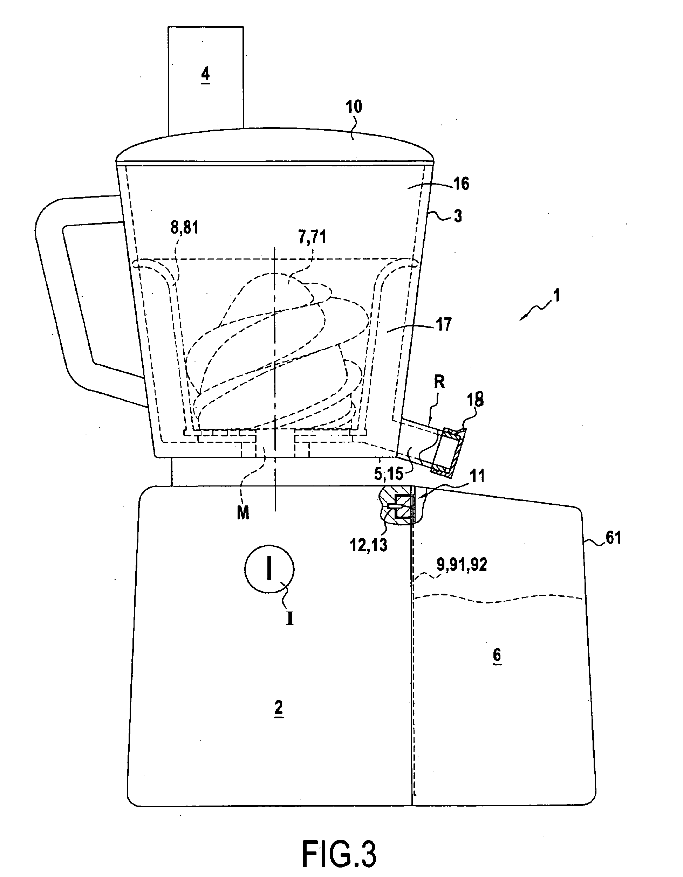

L'enceinte de travail **3** comprend un récipient **31** ouvert en sa partie supérieure tel qu'un bol, ainsi qu'un couvercle **10** apte à être fixé sur un bord supérieur dudit récipient **31.** Cette enceinte de travail **3** comporte une ouverture d'admission d'aliments **4,** ainsi qu'une première sortie d'évacuation **5** pour le lait de soja localisée à la base de l'enceinte de travail **3** et communiquant directement avec un réservoir **6.** Cette première sortie d'évacuation **5** peut, comme représenté sur les **figures 1** et **2****,** être formée par un conduit **14** descendant depuis le fond de l'enceinte de travail **3** vers l'intérieur du réservoir **6,** ou bien, comme représenté sur la **figure 3****,** être formée d'un conduit **15** réalisant un robinet **R** s'étendant à la base de l'enceinte de travail **3,** ce robinet **R** étant avantageusement équipé d'un bouchon anti-goutte **18.**

A l'intérieur de l'enceinte de travail **3** est installé un moyen de broyage **7** constitué d'une vis de pressage **71** accouplée en rotation au fond de l'enceinte de travail **3** avec l'arbre d'entraînement **M** du moteur électrique renfermé dans le boîtier **2** de l'appareil. Le moyen de broyage **7** divise l'enceinte de travail **3** en un premier compartiment **16** logeant le moyen de broyage **7** et un deuxième compartiment **17** communiquant avec la sortie d'évacuation **5.**

Cet accouplement peut être réalisé notamment par l'intermédiaire d'une pièce rotative (non représentée) fixée de façon étanche au fond de l'enceinte de travail **3** et présentant une partie femelle d'accouplement avec l'arbre d'entraînement **M** du moteur électrique sur la face externe du fond de l'enceinte de travail **3** et une partie mâle d'accouplement avec la vis de pressage **71** sur la face interne de l'enceinte de travail **3.**

La vis de pressage **71** peut présenter avantageusement une forme sensiblement ogivale et elle est conformée pour entraîner et écraser en rotation les graines de soja à presser et mixer en mélange.

Pour réaliser le pressage des graines de soja et la séparation du lait de soja en collaboration avec la vis de pressage **71,** l'appareil de l'invention comporte également un moyen de filtration **8,** qui sur la **figure 1** n'est pas représenté, formé par exemple d'un tambour de filtration **81** monté de façon coaxiale à la vis de pressage **71** à l'intérieur de l'enceinte de travail **3.** Ainsi le moyen de filtration **8** entoure le moyen de broyage **7.** Ce tambour de filtration **81** est avantageusement conçu tel que son diamètre interne soit sensiblement égal au diamètre maximal externe de la vis de pressage **71.**

Ainsi, on obtient un effet de pressage et mixage performant et continu des graines de soja mélangées à de l'eau entre la vis de pressage **71** et le tambour de filtration **81,** ce qui permet une bonne séparation du lait de soja et des résidus végétaux solides, constitués essentiellement de l'okara, c'est-à-dire les résidus de peaux des graines de soja. Lors du pressage des graines de soja entre la vis de pressage **71** et le tambour de filtration **81,** le lait de soja traverse les parois latérales du tambour de filtration **81** par des pores prévus à cet effet pour s'écouler ensuite entre le tambour de filtration 81 et les parois de l'enceinte de travail **3** vers la première sortie d'évacuation **5** puis par écoulement gravitaire dans le réservoir **6.**

Dans le même temps, l'okara est évacué par le fond de l'enceinte de travail **3** par une deuxième sortie d'évacuation pour les résidus de pressage (non représentée) vers un second réservoir de stockage des résidus végétaux solides de mixage et pressage des graines de soja.

Conformément à l'invention, le réservoir **6** dans lequel s'écoule le lait de soja après pressage est constitué de façon avantageuse par un bac **61** amovible du boîtier **2** de l'appareil, ce bac **61** étant conformé pour être inséré et retiré avec aisance du boîtier **2** de l'appareil **1.** Dans le mode de réalisation des **figures 1** et **2****,** le réservoir **6** comporte des moyens de connexion hydraulique **11** étanches avec la première sortie d'évacuation **5** de l'enceinte de travail **3.** Lorsqu'en revanche l'appareil **1** comporte un robinet **R** en guise de sortie d'évacuation **5** du lait de soja comme représenté sur la **figure 3****,** le réservoir **6** ne comporte pas de connexion hydraulique à l'enceinte de travail.

Toujours de façon avantageuse, le réservoir **6** est constitué de préférence d'un matériau transparent permettant de visualiser le lait en cours de cuisson.

Le réservoir **6** est associé à des moyens de chauffage **9** du lait de soja pour permettre la cuisson de celui-ci dans le réservoir **6,** qui le rend comestible.

Selon une forme de réalisation, les moyens de chauffage **9** comportent au moins une résistance **91** intégrée au réservoir **6.**

De façon préférée, la résistance **91** est de type CTP. La résistance **91** est disposée à l'intérieur du réservoir **6** et est connectée, par exemple comme représenté sur les **figures 1** et **2****,** par des contacteurs électriques **12, 13** respectivement du réservoir **6** et du boîtier **2** à des moyens d'alimentation électrique à l'intérieur dudit boîtier **2.** Cette résistance **91** peut notamment être formée sous forme d'un film **92** appliqué sur une paroi du bac **61** formant le réservoir **6.** L'utilisation d'une telle résistance **91** de type CTP s'avère particulièrement avantageuse en ce qu'elle permet une autorégulation de la chauffe du lait de soja.

Par ailleurs, afin de contrôler de façon appropriée la cuisson du lait de soja préparé, et tout particulièrement si une résistance classique est utilisée en remplacement d'une résistance **91** de type CTP , l'appareil **1** comporte également des moyens de contrôle de la température du lait de soja à l'intérieur du réservoir **6,** ainsi que, avantageusement, des moyens de réglage de la durée de fonctionnement des moyens de chauffage, pour choisir et contrôler de manière adaptée les cycles de cuisson du lait de soja à l'intérieur du réservoir **6.**

Dans le même temps, la deuxième sortie d'évacuation pour les résidus de pressage, non représentée sur les figures, communique avec un second réservoir formé à l'intérieur du boîtier **2** et dans lequel l'okara et tous les résidus de pressage sont évacués au fur et à mesure du pressage des graines de soja dans l'enceinte de travail **3.** Ce second réservoir pour les résidus de pressage est bien entendu de préférence également amovible pour en permettre un vidage aisé par l'utilisateur après chaque préparation de lait de soja.

Quel que soit le mode de réalisation particulier de l'appareil **1** décrit ci-avant, l'utilisation de cet appareil s'avère similaire et extrêmement simple pour l'utilisateur.

Il suffit dans un premier temps d'introduire dans l'enceinte de travail **3** des graines de soja imbibées en mélange avec de l'eau puis de mettre en fonction l'appareil, en actionnant par exemple un interrupteur **I** de commande. Une fois en fonction, la vis de pressage **71** de mixage et pressage écrase les graines de soja contre le tambour de filtration **81** placé dans l'enceinte de travail **3.** Le lait de soja "cru", produit de cet écrasement et ce mixage des graines dans l'enceinte de travail **3,** traverse les parois du tambour de filtration **81** et s'écoule par la première sortie d'évacuation **5** dans le bac **61.**

Une fois le lait de soja écoulé dans le bac **61,** la cuisson de celui-ci commence pour un cycle déterminé, préalablement réglé le cas échéant par l'utilisateur ou préréglé d'usine, l'appareil fonctionnant alors de manière entièrement automatique. A titre d'exemple, un cycle de cuisson usuel consiste à chauffer le lait de soja à 98°C pendant 20 minutes.

Dans le même temps que les graines sont pressées et mixées dans l'enceinte de travail **3,** les résidus de ces graines formant l'okara sont évacués par la seconde sortie d'évacuation dans un second réservoir de stockage des déchets.

Une fois le cycle de cuisson du lait de soja terminé, il suffit ensuite à l'utilisateur d'éteindre l'appareil **1** et de vider le réservoir **6** pour récupérer le lait de soja ainsi préparé.

L'appareil **1** de la présente invention permet de séparer les graines de soja de leur peau et de les écraser de manière uniforme et régulière tout en les mixant de façon continue avec leur eau de trempage pour former un lait de soja de bonne qualité. De plus, l'appareil permet, par la séparation du lait et de l'okara antérieurement à la cuisson du lait, de limiter les effets de moussage connus des appareils antérieurs, ainsi que d'améliorer les qualités nutritionnelles du lait produit.

L'appareil de l'invention peut servir à préparer et cuire d'autres aliments que des graines de soja. A titre d'exemple, les graines de soja peuvent être remplacées par des tomates, des framboises ou des abricots pour réaliser des jus ou des coulis, qui pourront être obtenus selon la taille des pores du moyen de filtration utilisé.

Par ailleurs à titre de variante de l'invention, le moyen de broyage **8** ne comporte pas nécessairement une vis de pressage, mais peut notamment comporter un couteau rotatif, tel que par exemple utilisé dans les appareils mélangeurs de type blender.

Dans une autre variante de réalisation, les moyens de chauffage **9** pourraient notamment être des moyens de chauffage par induction, disposés par exemple sous le réservoir **6.**

Si désiré, l'appareil **1** de l'invention peut également comporter des moyens de contrôle de la température de la préparation obtenue à l'intérieur du réservoir **6,** et/ou encore des moyens de réglage de la durée de chauffage des moyens de chauffage **9**.

L'invention n'est pas limitée aux exemples décrits et représentés car diverses modifications peuvent y être apportées sans sortir de son cadre.

## Revendications

1. - Appareil électroménager (1) de préparation et de cuisson d'une préparation alimentaire liquide telle que du lait de soja et/ou de jus et/ou de coulis, comportant :
- un boîtier (2) renfermant un moteur électrique d'entraînement,
- une enceinte de travail (3) adaptée pour être installée sur le boîtier (2), l'enceinte de travail (3) comportant une ouverture d'admission d'aliments (4) ainsi qu'une sortie d'évacuation (5) pour la préparation alimentaire liquide,
- un moyen de broyage (7) monté à l'intérieur de l'enceinte de travail (3) et accouplé mécaniquement à un arbre d'entraînement (M) du moteur électrique,
- un moyen de filtration (8) divisant l'enceinte de travail (3) en un premier compartiment (16) logeant le moyen de broyage (7) et un deuxième compartiment (17) communiquant avec la sortie d'évacuation (5),
- la sortie d'évacuation (5) communiquant avec un réservoir (6) amovible associé à des moyens de chauffage (9) de la préparation alimentaire liquide recueillie à l'intérieur du réservoir (6),
**caractérisé en ce que** :
- le premier compartiment (16) communique avec l'ouverture d'admission d'aliments (4)
- la sortie d'évacuation (5) est localisée à la base de l'enceinte de travail (3), et
- la sortie d'évacuation (5) est reliée à l'enceinte de travail (3) par un conduit (14, 15) adapté à une évacuation par gravité de la préparation alimentaire liquide dans le réservoir (6).

2. **-** Appareil électroménager selon la revendication 1, **caractérisé en ce que** le moyen de filtration **(8)** est amovible par rapport à l'enceinte de travail **(3).**

3. **-** Appareil électroménager selon la revendication 1 ou 2, **caractérisé en ce que** les moyens de chauffage **(9)** sont adaptés pour permettre un chauffage et une cuisson de la préparation alimentaire liquide contenue dans le réservoir **(6)** pendant une durée et à une température déterminées.

4. **-** Appareil électroménager selon l'une des revendications 1 à 3, **caractérisé en ce qu'**il comporte des moyens de contrôle de la température de la préparation alimentaire liquide à l'intérieur du réservoir **(6).**

5. **-** Appareil électroménager selon l'une des revendications 1 à 4, **caractérisé en ce qu'**il comporte des moyens de réglage de la durée de chauffage des moyens de chauffage **(9).**

6. **-** Appareil électroménager selon l'une des revendications 1 à 5, **caractérisé en ce que** les moyens de chauffage **(9)** comportent au moins une résistance **(91)** intégrée au réservoir **(6)** recevant la préparation alimentaire liquide, ladite résistance **(91)** étant connectée à des moyens d'alimentation électrique.

7. **-** Appareil électroménager selon la revendication 6, **caractérisé en ce que** la résistance **(91)** est de type CTP.

8. **-** Appareil électroménager selon la revendication 7, **caractérisé en ce que** la résistance **(91)** de type CTP est constituée d'un film appliqué sur une paroi au moins du réservoir **(6).**

9. **-** Appareil électroménager selon l'une des revendications 1 à 8, **caractérisé en ce que** le réservoir **(6)** est constitué d'un matériau transparent permettant de visualiser la préparation alimentaire liquide en cours de cuisson.

10. **-** Appareil électroménager selon l'une des revendications 1 à 9, **caractérisé en ce que** le réservoir **(6)** comporte des moyens de connexion **(11)** avec la première sortie d'évacuation **(5)** de l'enceinte de travail **(3).**

11. **-** Appareil électroménager selon l'une des revendications 1 à 10, **caractérisé en ce que** le moyen de broyage **(7)** comporte une vis de pressage **(71).**

12. **-** Appareil électroménager **(1)** selon l'une des revendications 1 à 11, **caractérisé en ce que** le moyen de filtration **(8)** entoure le moyen de broyage **(7).**

13. **-** Appareil électroménager selon la revendication 12, **caractérisé en ce que** le premier compartiment comporte une deuxième sortie d'évacuation pour les résidus de pressage.

14. **-** Appareil électroménager selon la revendication 13, **caractérisé en ce que** la deuxième sortie d'évacuation communique avec un second réservoir dans lequel les résidus de pressage sont évacués au fur et à mesure du pressage dans l'enceinte de travail **(3).**

15. **-** Appareil électroménager selon l'une des revendications 1 à 14, **caractérisé en ce que** la sortie d'évacuation (5) comporte un robinet de distribution **(R)** de la préparation alimentaire liquide.

## Claims

1. A household appliance (1) for preparing and cooking a liquid food preparation such as soy milk and/or juice and/or coulis, the appliance comprising:
• a housing (2) containing an electric drive motor;
• a working chamber (3) that is adapted to be installed on the housing (2), the working chamber (3) including an inlet opening (4) for inserting food, and a discharge outlet (5) for discharging the liquid food preparation;
• grinder means (7) that are mounted inside the working chamber (3) and that are coupled mechanically to a drive shaft (M) of the electric motor;
• filter means (8) that divide the working chamber (3) into a first compartment (16) that houses the grinder means (7), and a second compartment (17) that communicates with the discharge outlet (5); and
• the discharge outlet (5) that communicates with a removable reservoir (6) that is associated with heater means (9) for heating the liquid food preparation that is collected inside the reservoir (6);
the appliance being **characterized in that**:
• the first compartment (16) communicates with the inlet opening (4) for inserting food;
• the discharge outlet (5) is located at the base of the working chamber (3) ; and
• the discharge outlet (5) is connected to the working chamber (3) via a duct (14, 15) that is adapted to discharge the liquid food preparation by gravity into the reservoir (6).

2. A household appliance according to claim 1, **characterized in that** the filter means (8) are removable relative to the working chamber (3).

3. A household appliance according to claim 1 or claim 2, **characterized in that** the heater means (9) are adapted to enable the liquid food preparation contained in the reservoir (6) to be heated to a determined temperature and cooked for a determined period of time.

4. A household appliance according to any one of claims 1 to 3, **characterized in that** it includes control means for controlling the temperature of the liquid food preparation inside the reservoir (6).

5. A household appliance according to any one of claims 1 to 4, **characterized in that** it includes regulator means for regulating the heating time of the heater means (9).

6. A household appliance according to any one of claims 1 to 5, **characterized in that** the heater means (9) comprise at least one resistance element (91) that is incorporated in the reservoir (6) that receives the liquid food preparation, said resistance element (91) being connected to power supply means.

7. A household appliance according to claim 6, **characterized in that** the resistance element (91) is of the PTC type.

8. A household appliance according to claim 7, **characterized in that** the PTC-type resistance element (91) is constituted by a film that is applied to at least one wall of the reservoir (6).

9. A household appliance according to any one of claims 1 to 8, **characterized in that** the reservoir (6) is constituted by a transparent material making it possible to see the liquid food preparation during cooking.

10. A household appliance according to any one of claims 1 to 9, **characterized in that** the reservoir (6) includes connection means (11) for connecting with the first discharge outlet (5) of the working chamber (3).

11. A household appliance according to any one of claims 1 to 10, **characterized in that** the grinder means (7) comprise a juicer screw (71).

12. A household appliance (1) according to any one of claims 1 to 11, **characterized in that** the filter means (8) surround the grinder means (7).

13. A household appliance according to claim 12, **characterized in that** the first compartment includes a second discharge outlet for discharging the juicing residues.

14. A household appliance according to claim 13, **characterized in that** the second discharge outlet communicates with a second reservoir into which the juicing residues are discharged as juicing takes place in the working chamber (3).

15. A household appliance according to any one of claims 1 to 14, **characterized in that** the discharge outlet (5) includes a dispenser cock (R) for dispensing the liquid food preparation.

## Patentansprüche

1. Elektrisches Haushaltsgerät (1) zur Zubereitung und zum Kochen einer flüssigen Lebensmittelzubereitung, wie Sojamilch und/oder Saft und/oder Püree, umfassend:
- ein Gehäuse (2), das einen elektrischen Antriebsmotor enthält,
- einen Arbeitsbehälter (3), der dafür ausgelegt ist, auf dem Gehäuse (2) angebracht zu werden, wobei der Arbeitsbehälter (3) eine Öffnung zum Zuführen von Nahrungsmitteln (4) sowie einen Ablaßausgang (5) für die flüssige Lebensmittelzubereitung umfaßt,
- ein Zerkleinerungsmittel (7), das innerhalb des Arbeitsbehälters (3) angeordnet ist und mit einer Antriebswelle (M) des Elektromotors mechanisch gekoppelt ist,
- ein Filtermittel (8), das den Arbeitsbehälter (3) in ein erstes Abteil (16), welches das Zerkleinerungsmittel (7) aufnimmt, und ein zweites Abteil (17), das mit dem Ablaßausgang (5) in Verbindung steht, unterteilt,
- wobei der Ablaßausgang (5) mit einem abnehmbaren Behälter (6) in Verbindung steht, der Mitteln zum Erhitzen (9) der in dem Behälter (6) aufgefangenen flüssigen Lebensmittelzubereitung zugeordnet ist,
**dadurch gekennzeichnet, daß**:
- das erste Abteil (16) mit der Öffnung zum Zuführen von Nahrungsmitteln (4) in Verbindung steht,
- der Ablaßausgang (5) an der Basis des Arbeitsbehälters (3) gelegen ist, und
- der Ablaßausgang (5) mit dem Arbeitsbehälter (3) über eine Leitung (14, 15) verbunden ist, die für ein Ableiten der flüssigen Lebensmittelzubereitung durch Schwerkraft in den Behälter (6) ausgelegt ist.

2. Elektrisches Haushaltsgerät nach Anspruch 1, **dadurch gekennzeichnet, daß** das Filtermittel (8) gegenüber dem Arbeitsbehälter (3) lösbar ist.

3. Elektrisches Haushaltsgerät nach Anspruch 1 oder 2, **dadurch gekennzeichnet, daß** die Heizmittel (9) dafür ausgelegt sind, ein Erhitzen und ein Kochen der in dem Behälter (6) enthaltenen flüssigen Lebensmittelzubereitung für eine bestimmte Zeitdauer und auf/bei eine(r) bestimmte(n) Temperatur zu ermöglichen.

4. Elektrisches Haushaltsgerät nach einem der Ansprüche 1 bis 3, **dadurch gekennzeichnet, daß** es Mittel zur Kontrolle der Temperatur der flüssigen Lebensmittelzubereitung in dem Behälter (6) umfaßt.

5. Elektrisches Haushaltsgerät nach einem der Ansprüche 1 bis 4, **dadurch gekennzeichnet, daß** es Mittel zum Einstellen der Heizdauer der Heizmittel (9) umfaßt.

6. Elektrisches Haushaltsgerät nach einem der Ansprüche 1 bis 5, **dadurch gekennzeichnet, daß** die Heizmittel (9) wenigstens einen Widerstand (91) umfassen, der in den die flüssige Lebensmittelzubereitung aufnehmenden Behälter (6) integriert ist, wobei der Widerstand (91) an Stromversorgungsmittel angeschlossen ist.

7. Elektrisches Haushaltsgerät nach Anspruch 6, **dadurch gekennzeichnet, daß** der Widerstand (91) vom Typ PTC ist.

8. Elektrisches Haushaltsgerät nach Anspruch 7, **dadurch gekennzeichnet, daß** der Widerstand (91) vom Typ PTC von einem an wenigstens einer Wand des Behälters (6) aufgebrachten Film gebildet ist.

9. Elektrisches Haushaltsgerät nach einem der Ansprüche 1 bis 8, **dadurch gekennzeichnet, daß** der Behälter (6) aus einem transparenten Material besteht, das ermöglicht, die flüssige Lebensmittelzubereitung beim Kochen zu sehen.

10. Elektrisches Haushaltsgerät nach einem der Ansprüche 1 bis 9, **dadurch gekennzeichnet, daß** der Behälter (6) Mittel zum Verbinden (11) mit dem ersten Ablaßausgang (5) des Arbeitsbehälters (3) umfaßt.

11. Elektrisches Haushaltsgerät nach einem der Ansprüche 1 bis 10, **dadurch gekennzeichnet, daß** das Zerkleinerungsmittel (7) eine Preßschnecke (71) umfaßt.

12. Elektrisches Haushaltsgerät (1) nach einem der Ansprüche 1 bis 11, **dadurch gekennzeichnet, daß** das Filtermittel (8) das Zerkleinerungsmittel (7) umgibt.

13. Elektrisches Haushaltsgerät nach Anspruch 12, **dadurch gekennzeichnet, daß** das erste Abteil einen zweiten Ablaßausgang für die Preßrückstände umfaßt.

14. Elektrisches Haushaltsgerät nach Anspruch 13, **dadurch gekennzeichnet, daß** der zweite Ablaßausgang mit einem zweiten Behälter in Verbindung steht, in den die Preßrückstände in dem Maße des Pressens in dem Arbeitsbehälter (3) abgeführt werden.

15. Elektrisches Haushaltsgerät nach einem der Ansprüche 1 bis 14, **dadurch gekennzeichnet, daß** der Ablaßausgang (5) einen Hahn zur Abgabe (R) der flüssigen Lebensmittelzubereitung umfaßt.
